Europäisches Patentamt

**European Patent Office**

**Office européen des brevets**

(11) Numéro de publication: **0 030 192 B1**

(12) **FASCICULE DE BREVET EUROPEEN**

(45) Date de publication de fascicule du brevet: **05.02.-92**

(51) Int. Cl.5: **B01J 2/16**, B01J 13/02, B01J 8/24, A61J 3/06, B05B 13/00

(21) Numéro de dépôt: **80401694.7**

(22) Date de dépôt: **28.11.80**

(54) **Perfectionnement au dispositif d'introduction du courant gazeux dans les appareils de granulation et/ou d'enrobage en lit jaillissant.**

(30) Priorité: **30.11.79 FR 7929463**

(43) Date de publication de la demande:
**10.06.81 Bulletin 81/23**

(45) Mention de la délivrance du brevet:
**05.02.92 Bulletin 92/06**

(84) Etats contractants désignés:
**AT BE CH DE GB IT LI LU NL SE**

(73) Titulaire: **Société Chimique des Charbonnages
Tour Aurore Place des Reflets Cédex no 5
F-92080 Paris la Défense 2(FR)**

(72) Inventeur: **Debayeux, Christian
2, rue Carlo Sarrabezolles
F-31300 Toulouse(FR)**
Inventeur: **Lacroix, Hubert
28, allée des Platanes
Villeneuve Tolosane F-31270 Cugnaux(FR)**
Inventeur: **Sternicha, Félix
28, chemin Monlong
F-31300 Toulouse(FR)**

(74) Mandataire: **Fourquet, Antoinette et al
CdF Chimie S.A. Service Propriété Industrielle Tour Aurore Place des Reflets Cedex 5
F-92080 Paris la Défense 2(FR)**

## Description

La présente invention concerne un perfectionnement au dispositif d'introduction du courant gazeux dans les appareils de granulation et/ou d'enrobage en lit jaillissant.

Les lits jaillissants (souvent appelés également lits de type geyser) sont des lits de particules obtenus dans une enceinte d'axe vertical comportant à sa partie inférieure une partie tronconique à la pointe de laquelle on introduit un courant gazeux ascendant. Ce courant gazeux maintient les particules en suspension et provoque leur circulation selon des cycles fermés. En effet les particules sont entraînées par le courant gazeux ascendant au voisinage de l'axe de l'enceinte sous forme d'une sorte de jet, se déplacent radialement vers les parois de l'enceinte puis redescendent lentement pour revenir vers la pointe de la partie tronconique. D'autre part il se forme à la base du lit dans la partie tronconique une sorte de poche vide de particules. Là elles sont reprises par le courant gazeux ascendant. Le lit jaillissant est décrit dans le brevet français 1 125 461 du 11 mars 1955 déposé par National Research Council.

Il est connu d'utiliser le lit jaillissent pour granuler des produits fluides durcissables par évaporation d'eau ou de solvant ou par refroidissement et/ou pour enrober des particules ou noyaux fabriqués au préalable à l'aide de produits fluides durcissables. Selon ce procédé de granulation on maintient sous forme de lit jaillissent les granules en cours de formation ou les particules à enrober à l'aide d'un courant gazeux ascendant froid ou chaud et on pulvérise dans le courant gazeux ascendant au-dessous du lit jaillissent le produit durcissable. Ce dernier est partiellement durci dans le courant gazeux en particulier en traversant la poche vide de particules puis se dépose sur les particules du lit jaillissent présentes à la partie inférieure de la partie tronconique. La couche de produit pulvérisé finit de durcir pendant que les particules sont entraînées par le courant gazeux ascendant dans le jet central et qu'elles redescendent le long des parois de l'enceinte. Lorsque les particules arrivent à la pointe de la partie tronconique de l'enceinte elles reçoivent une nou velle couche de produit pulvérisé. La granulation et/ou l'enrobage se font donc par dépôt de couches successives de produit durcissable pulvérisé. Ce procédé de granulation est décrit dans res brevets français 1 275 463 et 1354758 déposés respectivement le 28 septembre 1960 et le 30 novembre 1961 par Potasse et Engrais Chimiques.

Les appareils utilisés jusqu'à présent pour le granulation en lit jaillissent sont constitués par une enceinte d'axe vertical, comportant une partie inférieure tronconique surmontée d'une partie cylindrique. Lorsqu'on désire travailler en continu cette enceinte est munie à la partie supérieure du lit d'un tropplein pour le soutirage des granules finis. Le courant gazeux ascendant est introduit à la base de plus petit diamètre de la partie inférieure tronconique de l'enceinte. Le pulvérisateur pour la substance à granuler ou la substance d'enrobage est disposé au voisinage du plan de la petite base de la partie tronconique de l'enceinte. Dans les appareils proposés jusqu'à présent, la jonction entre la conduite d'introduction du courant gazeux et la base de diamètre d de la partie tronconique de l'enceinte forme un convergent-divergent.

En effet la conduite d'alimentation en gaz a un diamètre supérieur au diamètre d et se termine également par une partie tronconique dont la petite base à le diamètre d. On pensait que le système convergent-divergent qui provoque une accélération importante du flux gazeux faciliterait la pulvérisation et par conséquent la granulation et l'enrobage. Mais on a constaté qu'un tel dispositif ne donne pas toute satisfaction quand on opère en continu, en particulier dans un appareil de diamètre élevé. En effet le courant gazeux ne se répartit pas de façon homogène, la pression dynamique étant plus élevée sur les bords de la partie tronconique qu'au voisinage de l'axe. Il en résulte la formation de gros agglomérés à la partie inférieure de la partie tronconique qui provoquent fréquemment après 2 à 3 heures de marche le blocage du lit. Il est alors nécessaire de vidanger le lit de granules et de nettoyer le granulateur.

Dans le brevet US 3110626, on a décrit un dispositif destiné à l'enrobage uniforme et précis de particules en fonctionnement discontinu comprenant une enceinte d'enrobage dont la partie inférieure en forme d'entonnoir ou de cône comporte un élément de contrôle tubulaire, cylindrique ou tronconique, disposé dans son axe, ajustable verticalement par translation qui contribue à la stabilité du lit et évite son étouffement éventuel. Un tube de Venturi est raccordé d'une part à la base de l'enceinte et d'autre part à des moyens, notamment une conduite d'alimentation, assurant l'introduction d'un courant gazeux tout d'abord dans le tube de Venturi puis dans l'enceinte d'enrobage. Une buse destinée à la pulvérisation du liquide d'enrobage à l'intérieur de l'élément de contrôle est située dans le Venturi et peut être déplacée verticalement le long de son axe.

La présente invention concerne une modification du dispositif d'introduction du courant gazeux qui permet d'obtenir à l'entrée du lit une veine gazeuse plus homogène et d'éviter la formation d'agglomérats dans le lit.

La présente invention concerne un perfectionnement au dispositif d'introduction du courant gazeux dans les appareils de granulation et/ou d'enrobage en lit jaillissant comportant une partie inférieure tronconique divergente dont la base de plus petit diamètre supérieur à d par l'intermédaire d'une partie tronconique convergente dont la petite base a pour diamètre d caractérisé par le fait que l'on intercale entre les petites bases de diamètre d des parties tronconiques divergente de l'enceinte de granulation et convergente de la conduite d'alimentation en gaz une partie cylindrique ayant une hauteur h supérieure à 0,5 d et inférieure à 0,66 d.

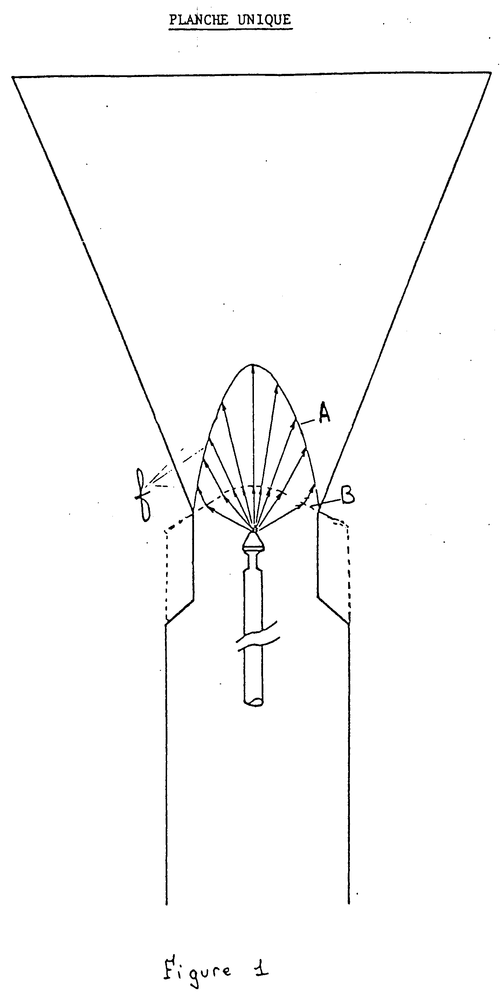

En effet on a constaté que la présence de cette partie cylindrique empêche la formation de gros granules et permet d'avoir un lit stable. En effet la présence de cette partie cylindrique modifie la forme de le poche vide de granules qui se forme à la partie inférieure du lit jaillissant. La figure 1 annexée illustre la forme de cette poche en présence et en l'absence de la partie cylindrique pour un même lit de granules et une même vitesse de courant gazeux. La ligne A montre la limite supérieure de cette poche avec une partie droite et la ligne B la limite supérieure de cette poche sans partie droite. On voit que pour un même débit du pulvérisateur le substance pulvérisée se répartit sur une plus grande surface dans le cas de la poche de forme A que dans le cas de la poche de forme B.

D'autre part sur la figure 1 les flèches f montrent schématiquement la trajectoire des particules issues du pulvérisateur. On voit qu'en présence de la partie cylindrique le cone de pulvérisation se referme.

Par conséquent il y a peu de chances pour que la substance pulvérisée n'atteignent la paroi de le partie tronconique et ne forme des enrochages.

La partie cylindrique a une hauteur h comprise entre 0,5 d et 0,66 d.

En effet pour une hauteur h inférieure à 0,5 d il y a encore formation de trop gros granules et blocage du lit. Pour des hauteurs supérieures à 0,66 d le perte de charge devient très importante.

## Revendications

1. Perfectionnement au dispositif d'introduction du courant gazeux dans les appareils de granulation et/ou d'enrobage en lit jaillissent comportant une partie inférieure tronconique divergente dont la base de plus petit diamètre d est reliée à une conduite d'alimentation en gaz de diamètre supérieure à d par l'intermédiaire d'une partie tronconique convergente dont le petite base a pour diamètre d caractérisé par le fait que l'on intercale entre les petites bases de diamètre d des parties tronconiques divergente de l'enceinte de granulation et convergente de le conduite d'alimentation en gaz, une partie cylindrique ayant une hauteur h supérieure à 0,5 d et inférieure à 0,66 d.

## Claims

1. Improvement to the device for introduction of the gaseous current into the apparatuses for granulation and/or coating in a spouting bed, comprising a diverging frustoconical lower part whose base of smaller diameter d is connected to a gas supply conduit of diameter greater than d by way of a converging frustoconical part whose small base has a diameter d, characterised by the fact that there is interposed, between the small bases of diameter d of the diverging frustoconical part of the granulation chamber and converging frustoconical part of the gas supply conduit, a cylindrical part having a height h greater than 0.5 d and smaller than 0.66 d.

## Patentansprüche

1. Verbesserung einer Zuführvorrichtung des gasführenden Stromes bei Granulier- und/oder Ummantelungsapparaten vom Sprudelbettyp mit einem unteren kegelstumpfartig divergierenden Abschnitt, dessen Basis mit dem kleineren Durchmesser d mit einer Gaszuleitung mit einem Durchmesser größer als d durch das Zwischenstück eines kegelstumpfartig konvergierenden Abschnitts verbunden ist, dessen kleine Basis den Durchmesser d aufweist, dadurch **gekennzeichnet,** daß man zwischen den den Durchmesser d aufweisenden kleinen Basen des kegelstumpfartig divergierenden Abschnitts des Granulierbehälters und des kegelstumpfartig konvergierenden Abschnitts der Gaszuleitung einen zylindrischen Abschnitt mit einer Höhe h größer 0,5 mal d und kleiner 0,66 mal d anordnet.

PLANCHE UNIQUE

Figure 1